# EUROPEAN PATENT SPECIFICATION

(11) **EP 1 279 077 B1**
(45) Date of publication and mention of the grant of the patent: **31.08.2005**
(21) Application number: 01921646.4
(22) Date of filing: 19.04.2001
(51) Int. Cl.: G05B 19/042

(54) **REMOTE CONTROLLER WITH ENERGY SAVING**
ENERGIESPAR-FERNSTEUERUNG
UNITE DE COMMANDE A DISTANCE A ECONOMIES D'ENERGIE

(30) Priority: 25.04.2000 GB 0009962; 19.02.2001 GB 0104000
(43) Date of publication of application: 29.01.2003
(73) Proprietor: Switchforward Limited, Dorchester DT2 9DX (GB)
(72) Inventor: HARDWICK, Michael Dennis, Dorchester DT2 9DX (GB)
(74) Representative: Atkinson, Ralph
(86) International application number: PCT/GB2001/001777
(87) International publication number: WO 2001/082012

(56) References cited:
- WO-A-97/23851
- GB-A- 2 342 206
- US-A- 5 530 431
- US-A- 5 570 079
- US-A- 5 621 385
- US-A- 5 841 390
- PATENT ABSTRACTS OF JAPAN vol. 1996, no. 04, 30 April 1996 (1996-04-30) & JP 07 334776 A (TAKAO OKADA), 22 December 1995 (1995-12-22)
- PATENT ABSTRACTS OF JAPAN vol. 018, no. 652 (E-1642), 12 December 1994 (1994-12-12) & JP 06 253375 A (SEKISUI CHEM CO LTD), 9 September 1994 (1994-09-09)

## Description

This invention concerns the control of electrical apparatus remotely, especially but not exclusively for reducing the power consumed thereby.

Many premises, such as factories, shops and offices, contain electrical apparatus which needs to be on for only a portion of each day. A cold drinks dispenser in a factory, for instance, needs to be on (cooling the drinks it contains) during the hours when the factory is in an open state - that is, when staff are working on the premises; but such a cold drinks dispenser does not need to be on when the factory is in a closed state - that is, when it is unoccupied, say at night. The same applies, of course, to hot drinks dispensers and a wide range of other apparatus including air conditioning units, space heaters, water heaters, fans, lights and so forth.

Energy and costs are saved if such items of apparatus are switched off when not required. Two known ways of doing this are (a) to appoint somebody to go around the premises and switch the apparatus on and off as appropriate and (b) to connect the apparatus to the power supply by means of time switches. Both of these approaches have problems, as will now be explained.

Appointing somebody to switch the apparatus on and off may be relatively expensive, especially if the person appointed is of a management grade (it being currently common in business for senior staff to be first to arrive and last to leave). It draws that person away from normal duties, which is contrary to good management practice. It calls for additional organisation, particularly in covering for sickness and holidays. And it presents a practical problem in that many kinds of apparatus such as drinks dispensers are deliberately arranged to shield access to their connections with the power supply, for safety and to deter tampering. Finally, the person appointed may become neglectful of the task over time, especially if nobody else notices whether or not the task is being properly performed.

The problems outlined above in relation to manual switching may be overcome by the use of time switches, but at the cost of introducing other problems. First, time switches inherently work on a routine, changing from on to off at set times of the day, and thus they do not offer any flexibility with regard to use of premises: they do not, for instance, adapt to early opening or late closing. In any event, time switches need to be reset twice a year, when clocks are seasonally adjusted. Also, unless the time switch is sophisticated enough (and therefore expensive) to be programmable for a whole week, it will treat weekends and holidays as normal working days and an appliance connected to it will be switched on even though the premises are closed.

The various problems of manual switching and time switching may be addressed by remote control systems, and a large number of such systems, using a range of signalling media are previously known. For instance, United Kingdom patent application 2 325 070 A discloses a lighting control system operated by a hand-held control unit transmitting infra-red, ultrasound, microwave or radio signals; European patent application 0 255 580 A2 also discloses a lighting control system operated by a remote control device, in this case with different control signals to control different lights; United Kingdom patent application 2 036 462 A discloses an electrical socket outlet incorporating a control unit responsive to control signals to switch the socket on; and United Kingdom patent application 2 032 664 A discloses a switch for an electrical appliance actuated remotely by mains signalling. Other remote control systems are disclosed in GB 2 322 214 A, GB 2 060 964 A, EP 0 089 641 A1, EP 0 031 874 A1 and WO 95/02231 A1.

In none of these prior systems noted above is switching controlled by registering the open or closed state of the building, which is an object of the present invention. Further, none of these prior systems is specifically concerned with energy saving.

According to a first aspect of the invention there is provided a system for controlling electrical apparatus remotely, which system comprises register means for registering whether a building containing the apparatus is in an open state or a closed state, a controller operatively associated with the register means to transmit a control signal representing said state of the building, and a receiver remote from the controller for receiving the control signal, wherein the receiver includes a switch operable by the control signal to switch the apparatus on and off alternatively according to whether the control signal represents the open or the closed state of the building.

The invention offers energy saving by switching controlled apparatus off when the building is closed. Thus, for instance, a cold drinks dispenser in a factory under the control of the invention will be turned off when the factory is closed. Those skilled in the art will appreciate that certain apparatus, such as stand-by lights, may by means of the invention be turned on when the building is closed.

Preferably the controller transmits the control signal automatically whenever the building is vacated and reentered. This may be done by incorporating the register means in or associating the register means with some means of controlling access to the building, such as an intruder alarm or a lock for the building.

Preferably, also, the controller transmits the control signal repetitively when the building is in its open or its closed state. This combats any spurious signals which might interfere with the proper operation of the switch.

The controller may be manually operable, and it may be portable.

The control signal may be a radio signal of an approved frequency such (in the United Kingdom) in the 433 MHz band. The control signal is preferably encoded, which has a number of benefits: it guards against malfunctions from unauthorised operation or extraneous spurious signals; it improves reliability, by allowing received signals to be checked; it allows the system to be differentiated from any other similar system in the vicinity; and it allows the system to be partitioned, allowing different appliances to be turned on and off separately.

According to a second aspect of the invention there is provided a method of saving energy by switching electrical apparatus of a building off when the building is in a closed state and on when the building is in an open state, or *vice versa*, which method comprises registering the state of the building, transmitting a control signal representing the registered state and remotely switching said apparatus on and off in response to the control signal.

The apparatus is preferably switched automatically when the control signal changes between representing the open state and representing the closed state. The control signal is preferably transmitted repetitively as long as the registered state is unchanged.

The invention will now be described by way of example only with reference to the accompanying schematic drawings in which -
*Figure 1* is a diagrammatic representation of a first embodiment of a system for controlling powered apparatus remotely according to the invention;
*Figure 2* is a representation in isometric projection of an electrical adapter unit of the first embodiment of the system;
*Figure 3* is a block diagram of a controller of a second embodiment of a system for controlling electrically powered appliances remotely according to the invention; and
*Figure 4* is a block diagram of switching means of the second embodiment of the system.

### Figure 1

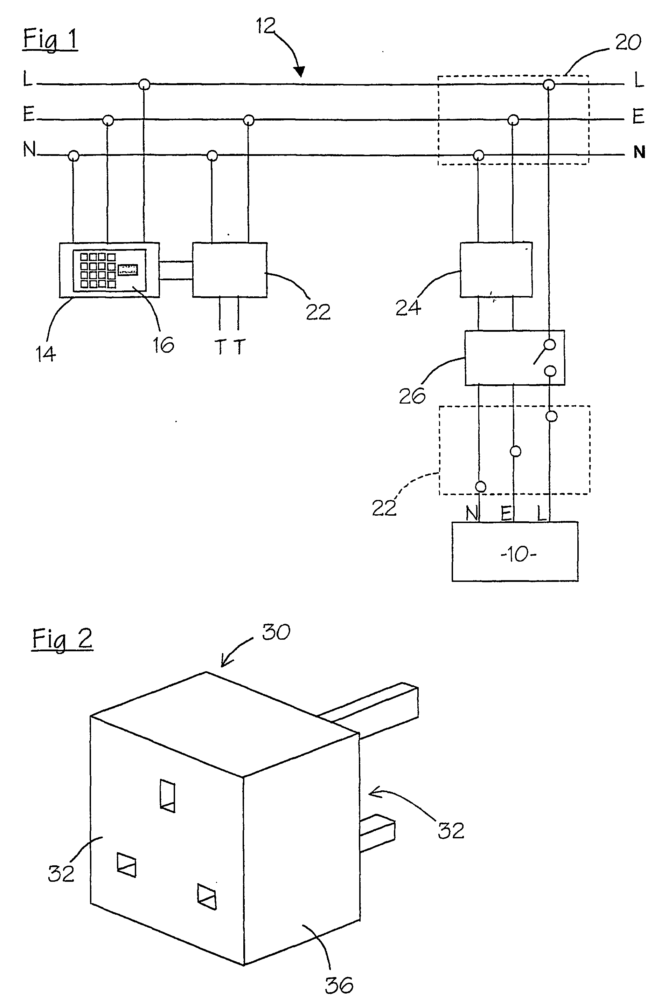

Referring first to *Figure 1*, this shows a cold drinks dispenser **10** of the kind typically provided in a building such as an office or factory for the convenience of staff. The drinks dispenser **10** is powered from a conventional electrical power supply indicated in part at **12** and comprising live (L), earth (E) and neutral (N) wires. Other powered apparatus, not shown for simplicity, may of course be connected to the power supply.

Also powered from the same power supply is an intruder alarm system of which the control box is shown at **14.** The alarm system is of conventional form and its detailed design does not form part of the present invention. The alarm system control box **14** is provided in well known fashion with a keypad 16 whereby a secret number may be keyed in and including an ENTER key for confirming the number and thereby alternatively arming and disarming the alarm system. Naturally, the alarm system is armed while the building is closed and disarmed while it is closed. Thus the alarm system effectively registers the (open or closed) state of the building.

As well as the usual array of sensors (omitted from the drawing for the sake of simplicity) a tone generator **18** is connected to the alarm system at the control box **16** in such a way that a tone is generated when the alarm system changes state from armed to disarmed and vice versa. The tone generator **18** is connected to the E and N wires of the power supply **12** so that the tones generated are transmitted over this pair of wires.

As shown in *Figure 1*, the drinks dispenser **10** is connected to the power supply **12** by a receiver which, as will hereinafter be described, responds to the tones transmitted over the earth and neutral wires of the circuit **12.** The receiver comprises first connection means **20** engaged with the L, E and N wires, second connection means **22** engaged with the L, E and N wires of the drinks dispenser **10,** a tone detector **24** connected to the E and N pins of the first connection means **20** and a relay **26** connected to the tone detector **24.** The relay **26** is operable to make and break the L path from the first connection means **20** to the second connection means **22.** When a tone from the tone generator **18** is transmitted over the E and N wires of the power supply **12,** it is detected by the tone detector **24** of the receiver and this in turn causes the relay **26** to change from make to break or vice versa.

The drinks dispenser **10** is required to be on whenever the building is open, so during this time the L path to the dispenser **10** is made. When the building is to close, the last task before it is vacated is to arm the intruder alarm system by means of the control box **14.** As the alarm system is armed (say, when the ENTER key is depressed) a tone representing the closed state of the building is generated by the tone generator **18.** This tone is transmitted over the E and N wires of the power supply **12,** where it is detected by the tone detector **24.** This changes the relay **26** from make to break, cutting off power from the drinks dispenser **10.** Thus the dispenser **10** is off when the building is closed.

When the building is reentered (which may be the next morning or at some other time eg after a weekend or holiday) the first task is to disarm the intruder alarm system by means of the control box **14.** Again, as the alarm system is disarmed, a tone representing the open state of the building is transmitted and received, the relay **26** returns from break to make and the drinks dispenser **10** is turned on again.

In this way the drinks dispenser is on, and consuming power, only when the building is open, with a consequent saving of electricity and cost. It will be noted that the power supply **12** as a whole is not switched off but remains substantially constant even while the building is closed. Thus the intruder alarm (and any other apparatus requiring continuing power from the supply) remains on.

A number of proprietory tone generators and tone detectors are available for use in the invention, and an economical approach is to use dual-tone multifrequency (DTMF) chips which are used on a very large scale in telecommunications, such as the National Semiconductor 53130 tone generator and the Mostek 5102(N)-5 tone detector. DTMF provides for a first pair of frequencies to signal a change from closed to open and a second pair of frequencies to signal a change from open to closed. The use of two signals in this way, the first to make the relay connection and the second to break it, is better than a single signal driving the relay alternately one way and then the other because it guards against the possibility of the power control system becoming (eg through a false signal) out of step with the alarm system. An additional preferred safeguard is to provide means for transmitting a control signal under manual control, to allow the system of *Figure 1* to be set and reset independently of the intruder alarm system. This may be done by means of a telephony connection T,T to the tone generator **22** and/or by an override button or switch operatively connected to the tone generator **22** or possibly by signalling through the power supply network. In this way a member of staff may, among other things, switch certain apparatus on or off remotely. Those skilled in the art will appreciate that other kinds of mains signalling technique may be used in the invention.

Whilst the embodiment of *Figure 1* has been described as having a control signals transmitted whenever an intruder alarm system is armed or disarmed, it will be understood that this may be done in other ways. An alternative way of registering whether the building is open or closed, for instance, would be to connect the signal generator to a lock of the building.

### Figure 2

As shown in *Figure* 2 the receiver of the power control system of *Figure 1* may conveniently be incorporated in an electrical adapter unit **30** providing a three-pin plug fitment **32** on one side and a three-pin socket fitment **34** on the other side. In use the plug fitment **32** of the adapter unit 30 is plugged into a socket outlet (not shown) of a power supply such as **12** *(Figure 1*), forming first connection means **20.** A plug (not shown) on the power cord of apparatus such as drinks dispenser **10** is plugged into the socket fitment **34** of the adapter unit **30,** forming second connection means **22.** A tone detector **24** and a relay **26** are connected between plug **32** and socket **26** in the manner shown in *Figure 1* but not visible in *Figure 2,* being enclosed by the casing **36** of the adapter unit **30.**

The adapter unit **30** provides means whereby any powered apparatus such as the drinks dispenser of *Figure 1* may be switched off when not required. Neither the power supply nor the apparatus itself needs to be modified, although it should be noted that this arrangement calls for precautions against fire or other hazards which may arise if certain appliances are turned on remotely without a responsible person present. A plurality of pieces of apparatus may be served from a common power supply by way of individual adapter units **30.** Further, by selectively setting the tone detectors to respond to different signals, commonly served pieces of apparatus may be switched on and off differentially as required.

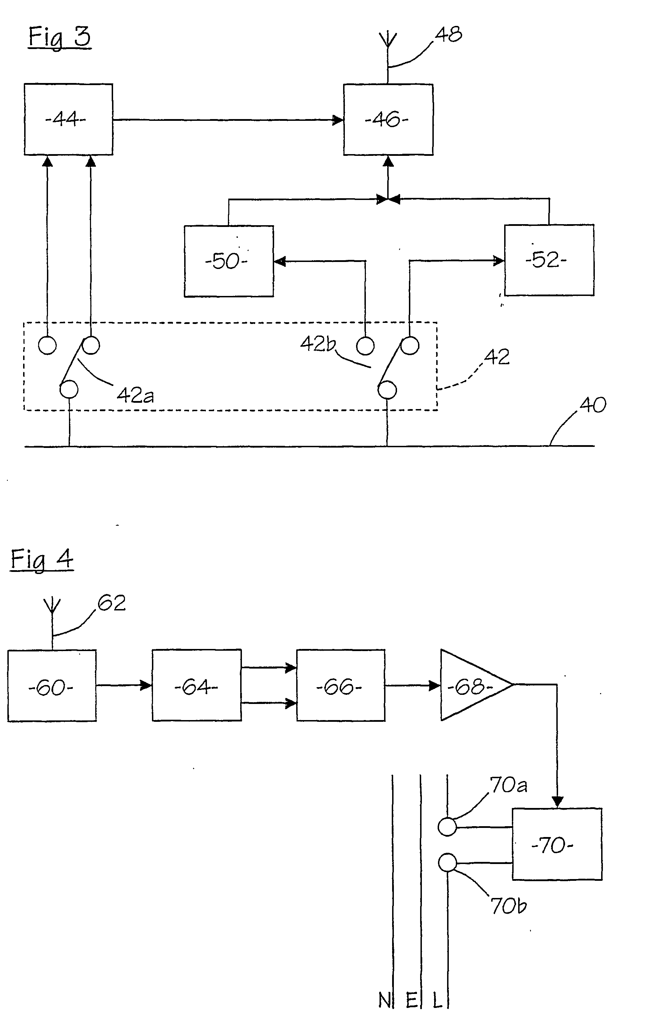

Instead of tones transmitted over mains wiring as described above with reference to *Figures 1* and *2*, a second embodiment of the invention is controlled by way of radio signals, as will now be described (including certain additional features) with reference to *Figures 3* and *4*.

### Figure 3

*Figure 3* illustrates a controller of the second embodiment. A supply voltage is delivered (from a mains supply by way of a transformer, not shown for simplicity) from a line **40** to both parts **42a** and **42b** of a two-part, two-position key-switch shown in broken lines at **42.** The key-switch **42** is located at a convenient position, eg adjacent the front door of a building containing the system, and it is manually operable by means of a key (not shown) which is removable to guard against unauthorised operation. The key-switch **42** is connected by way of part **42a** to an encoder **44** and thence to a first input of a radio transmitter **46** having an antenna **48.** The key-switch **42** is also connected, by way of part **42b,** to a pair of timers **50** and **52** arranged in parallel, and thence to a second input of the radio transmitter **46.** The radio transmitter operates at 433Mhz which, in the United Kingdom at least, is a frequency band permitted for this use and for which proprietary transmitter and receiver modules are readily available.

When the key-switch **42** is set (by means of its key) in a first of its two positions, the encoder **44** generates a signal representing OPEN for transmission by the transmitter **46.** As long as the key-switch **42** stays in this first position the timer **50,** which is energised by part **42b** in the first position of the key-switch **42,** causes the transmitter **46** to transmit the OPEN signal as a 1s burst every 150s. Similarly, when the key-switch **42** in the second of its two positions, the encoder **44** generates a signal representing CLOSED for transmission by the transmitter **46,** and as long as the key-switch **42** stays in this second position the timer **52,** which is similar to the timer **50** but energised by part **42b** when the key-switch **42** is in its second position, causes the transmitter **46** to transmit the CLOSED signal as a 1s burst every 150s. Whenever the key-switch **42** is reset, ie changed by means of its key from its first position to its second position or vice versa, the newly energised timer **50** or **52** triggers an immediate 1s burst of transmission from the transmitter **46,** signalling a change between OPEN and CLOSED.

It will thus be understood that the key-switch **42** registers the state of the building (like, or additional to, the intruder alarm and building lock hereinbefore described with reference to *Figure 1*). The controller of *Figure 3* signals a change of state of the building as soon as the key-switch **42** is reset and, as is described in more detail below, the system switches apparatus connected to it on or off at once. A burst of 1s is long enough to distinguish the control signal from extraneous noise or other transmissions, so the system switches reliably. And the repetition of the control signal at 150s intervals cancels any spurious signals, so the system is protected against an incorrect setting.

### Figure 4

*Figure 4* illustrates the receiver of the second embodiment of the invention. The receiver of *Figure 4* includes a radio receiver **60,** with antenna **62,** tuned to receive a control signal transmitted (in 1s bursts) from the transmitter **46** of *Figure 3.* The radio receiver **60** passes these control signals to a decoder **64** which determines whether each such signal represents OPEN or CLOSED and triggers a flip-flop **66** accordingly. The flip-flop 66 has two alternative states corresponding respectively to OPEN and CLOSED and includes a latching circuit (not detailed, but of well known form) so that it stays in one state or the other until it receives a contrary signal from the decoder **64.** The flip-flop **66** has an output which is thereby latched and this output is amplified by an amplifier **68** to drive a relay **70.** The relay has contacts **70a** and **70b** in the live wire L of the power supply to apparatus (not shown) such as a cold drinks machine.

The invention can be applied to any apparatus which needs to be switched on and off according to the state of a building including, as well as the cold drinks dispenser referred to, hot drinks dispensers, water heaters, space heaters, fans, air conditioning units and lights. With regard to lights, the system may turn security lights on when a building is closed, as well as turning main lights off. Lights and some other items may be turned to a low or stand-by setting rather than being turned off completely when a building is closed. For instance, during cold weather a space heater in a building may be required to operate at a high level for staff comfort when the building is open, but operation at a low level (enough to prevent freezing, say) may be adequate when the building is closed. The invention may be arranged to effect switching between such high and low levels, and for the avoidance of doubt references herein to switching apparatus "on" and "off" are to be construed accordingly.

Various modifications and adaptations of the system as described may be made without departing from the essence of the invention. For example, the controller of *Figure 3* may be portable and battery-powered, rather than as described. This offers benefits in both large scale and small scale applications. On a large site one person, such as a security guard on his rounds, can control appliances in a number of buildings. And on a small scale, for domestic application a householder may carry a portable controller and use it to switch on house lights when arriving home, or if disturbed at night.

The receiver of *Figure 4* may be incorporated in an adapter unit similar to that shown in *Figure 2,* or in an electrical plug of the apparatus to be controlled (which reduces the likelihood of the receiver's being lost or stolen). Those skilled in the art will appreciate that a number of appliances equipped with such adapters or plugs may be dispersed around a building to be switched on and off together by means of a single, conveniently located controller. The receiver of *Figure 4* may otherwise be contained within an electrical socket rather than in a plug, whereby whatever is plugged into that socket may be remotely controlled. As another possible modification, the receiver of *Figure 4* may be partitioned so that, say, the relay **70** and its contacts are in a plug and the rest of the receiver in a socket, interconnected by way of the earth or neutral, whereby remote switching would be available only through the plug and corresponding socket.

Finally, similar to the facility T,T or the like permitting the system of *Figure 1* to be reset manually, the system of *Figures 3* and *4* may be provided with a manual override control separate from the controller, whereby equipment controlled by the system may be turned on independently of the controller. An example of the benefit of this is as follows. Consider the use of the system in a military barracks having a number of accommodation blocks for troops. Each block is provided with a manual override button, near its entrance, operable to switch on controlled apparatus in that block independently of the registered state of the block. If the troops go away, say on a tour of duty, the system registers the empty blocks and turns off unnecessary apparatus therein, without anybody having to enter the essentially private accommodation. When the troops return to any block, all they have to do is press the manual override button to turn the apparatus in that block back on.

## Claims

1. A system for controlling electrical apparatus remotely to reduce power consumed thereby, which system comprises:
register means for registering whether a building containing the apparatus is in an open state or close state;
a controller operatively associated with the register means to transmit a control signal representing said state of the building; and
a receiver remote from the controller for receiving the control signal, wherein the receiver includes a switch operable by the control signal to switch the apparatus on and off alternatively according to whether the control signal represents the open or the closed state of the building.

2. A system for controlling electrical apparatus remotely as claimed in claim 1, wherein the controller transmits the control signal automatically whenever the building is vacated and reentered.

3. A system for controlling electrical apparatus remotely as claimed in claim 1 or claim 2, wherein the controller transmits the control signal repetitively when the building is in its open or its closed state.

4. A system for controlling electrical apparatus remotely as claimed in any preceding claim, wherein the register means comprises an intruder alarm for the building.

5. A system for controlling electrical apparatus remotely as claimed in any preceding claim wherein the register means comprises a lock for the building.

6. A system for controlling electrical apparatus remotely as claimed in any preceding claim, wherein the controller is manually operable.

7. A system for controlling electrical apparatus remotely as claimed in claim 6, wherein the controller is portable.

8. A system for controlling electrical apparatus remotely as claimed in any preceding claim, wherein the control signal is a radio signal in the 433 MHz band.

9. A system for controlling electrical apparatus remotely as claimed in any preceding claim, wherein the receiver is embodied in an electrical socket and/or an electrical plug for the apparatus.

10. A system for controlling electrical apparatus remotely as claimed in any preceding claim, wherein the control signal is encoded.

11. A system for controlling electrical apparatus remotely as claimed in any preceding claim, including means separate from the controller for manually overriding the control thereof.

## Patentansprüche

1. System zum Fernkontrollieren eines elektrischen Apparates, um die davon aufgenommene Leistung zu reduzieren,
wobei das System umfasst:
ein Registriermittel zum Registrieren, ob ein den Apparat enthaltendes Gebäude in einem offenen Zustand oder einem geschlossenen Zustand ist;
einen mit dem Registriermittel operativ verknüpften Controller, um ein den Zustand des Gebäudes wiedergebendes Kontrollsignal zu übertragen, und
einen von dem Controller entfernten Empfänger zum Empfangen des Kontrollsignals, worin der Empfänger einen durch das Kontrollsignal beeinflussbaren Schalter umfasst, um den Apparat alternativ ein- und auszuschalten, je nachdem, ob das Kontrollsignal den offenen oder den geschlossenen Zustand des Gebäudes wiedergibt.

2. System zum Fernkontrollieren eines elektrischen Apparates nach Anspruch 1, worin der Controller das Kontrollsignal automatisch überträgt, wann immer das Gebäude geräumt oder wieder betreten wird.

3. System zum Fernkontrollieren eines elektrischen Apparates nach Anspruch 1 oder 2, worin der Controller das Kontrollsignal wiederholt überträgt, wenn das Gebäude in seinem offenen oder seinem geschlossenen Zustand ist.

4. System zum Fernkontrollieren eines elektrischen Apparates nach einem der vorhergehenden Ansprüche, worin das Registriermittel einen Einbrecheralarm für das Gebäude umfasst.

5. System zum Fernkontrollieren eines elektrischen Apparates nach einem der vorhergehenden Ansprüche, worin das Registriermittel ein Schloss für das Gebäude umfasst.

6. System zum Fernkontrollieren eines elektrischen Apparates nach einem der vorhergehenden Ansprüche, worin der Controller manuell beeinflussbar ist.

7. System zum Fernkontrollieren eines elektrischen Apparates nach Anspruch 6, worin der Controller tragbar ist.

8. System zum Fernkontrollieren eines elektrischen Apparates nach einem der vorhergehenden Ansprüche, worin das Kontrollsignal ein Funksignal in dem 433 MHz-Band ist.

9. System zum Fernkontrollieren eines elektrischen Apparates nach einem der vorhergehenden Ansprüche, worin der Empfänger in einer elektrischen Steckdose und/oder einem elektrischen Stecker für den Apparat aufgenommen ist.

10. System zum Fernkontrollieren eines elektrischen Apparates nach einem der vorhergehenden Ansprüche, worin das Kontrollsignal codiert ist.

11. System zum Fernkontrollieren eines elektrischen Apparates nach einem der vorhergehenden Ansprüche, das ein von dem Controller separates Mittel zum manuellen Umgehen von dessen Kontrolle umfasst.

## Revendications

1. Système de commande d'appareil électrique à distance pour réduire l'énergie consommée par celui-ci, lequel système comprend :
des moyens de repérage pour repérer si un bâtiment contenant l'appareil est dans un état ouvert ou état fermé ;
un dispositif de commande associé de façon opérationnelle aux moyens de repérage pour transmettre un signal de commande représentant ledit état du bâtiment ; et
un récepteur éloigné du dispositif de commande pour recevoir le signal de commande, dans lequel le récepteur comprend un commutateur pouvant être actionné par le signal de commande pour allumer et éteindre l'appareil en alternance selon que le signal de commande représente l'état ouvert ou l'état fermé du bâtiment.

2. Système de commande d'appareil électrique à distance selon la revendication 1, dans lequel le dispositif de commande transmet le signal de commande automatiquement à chaque fois que le bâtiment est vide et occupé.

3. Système de commande d'appareil électrique à distance selon la revendication 1 ou la revendication 2, dans lequel le dispositif de commande transmet le signal de commande de façon répétitive lorsque le bâtiment est dans son état ouvert ou son état fermé.

4. Système de commande d'appareil électrique à distance selon l'une des revendications précédentes, dans lequel les moyens de repérage comprennent une alarme d'intrusion pour le bâtiment.

5. Système de commande d'appareil électrique à distance selon l'une des revendications précédentes, dans lequel les moyens de repérage comprennent un verrou pour le bâtiment.

6. Système de commande d'appareil électrique à distance selon l'une des revendications précédentes, dans lequel le dispositif de commande peut être actionné manuellement.

7. Système de commande d'appareil électrique à distance selon la revendication 6, dans lequel le dispositif de commande est portable.

8. Système de commande d'appareil électrique à distance selon l'une des revendications précédentes, dans lequel le signal de commande est un signal radio dans la bande de 433 MHz.

9. Système de commande d'appareil électrique à distance selon l'une des revendications précédentes, dans lequel le récepteur est réalisé dans une douille électrique et/ou une prise électrique pour l'appareil.

10. Système de commande d'appareil électrique à distance selon l'une des revendications précédentes, dans lequel le signal de commande est encodé.

11. Système de commande d'appareil électrique à distance selon l'une des revendications précédentes, comprenant des moyens séparés du dispositif de commande pour avoir la priorité manuelle sur la commande de celui-ci.
